# EUROPÄISCHE PATENTANMELDUNG

(11) **EP 0 551 612 A1**
(43) Veröffentlichungstag der Anmeldung: **21.07.1993**
(21) Anmeldenummer: 92120922.7
(22) Anmeldetag: 08.12.1992
(51) Int. Cl.: B62D 61/12, B60G 11/46

(54) **Fahrzeug mit wenigstens einer gegenüber am Fahrzeugrahmen mittels Luftbälgen gefederten Achse**

(30) Priorität: 14.01.1992 DE 9200350 U
(71) Anmelder: Karl Kässbohrer Fahrzeugwerke GmbH, D-89077 Ulm (DE)
(72) Erfinder: Schall, Hans, W-7906 Blaustein (DE)
(74) Vertreter: Grünecker, Kinkeldey, Stockmair & Schwanhäusser Anwaltssozietät

(57) **Zusammenfassung**

Ein Fahrzeug weist eine gegenüber einem Fahrzeugrahmen mittels Luftbälgen (3) gefederte Achse (4) auf, die von verschwenkbar am Fahrzeugrahmen (2) gelagerten Längslenkern (16,17) gehalten ist. Die Luftbälge sind durch Ventile be- und entlüftbar und zum Halten der Achse bei zumindest teilweise entlüfteten Luftbälgen ist eine Achshalteeinrichtung angeordnet. Die Achshalteeinrichtung ist als Feder (8) ausgebildet, deren oberes Ende dem Fahrzeugrahmen und deren unteres Ende der Achse zugeordnet ist.

## Beschreibung

Die Erfindung geht von einem Fahrzeug mit wenigstens einer gegenüber einem Fahrzeugrahmen mittels Luftbälgen gefederten Achse aus, die von verschwenkbar am Fahrzeugrahmen gelagerten Längslenkern gehaltert ist, wobei die Luftbälge durch Ventile be- und entlüftbar sind, und mit einer Achshaltereinrichtung zum Halten der Achse bei zumindest teilweise entlüfteten Luftbälgen.

Ein solches Fahrzeug ist aus der DE 33 33 171 C2 bekannt. Bei diesem Fahrzeug ist zusätzlich zum Längslenker ein Liftarm an einem unterhalb der Achse angeordneten Achslappen und an einem unteren Ende des Luftbalgs befestigt. Auf dem anderen Ende des Liftarms ist die als Luftbalg ausgebildete Achshalteeinrichtung angeorndet. Mittels der Achshalteeinrichtung wird ein Herabhängen der Achse bei Entlastung oder beim Anheben des Fahrzeugs verhindert. Außerdem kann bei Leerfahrt des Fahrzeugs die Achse mittels der Achshalteeinrichtung angehoben werden.

Nachteilig bei dem aus der DE 33 33 171 C2 vorbekannten Fahrzeug ist, daß zusätzlich zum Längslenker ein Liftarm angeorndet werden muß. Dies erhöht den konstruktiven Aufwand sowie die Kosten der Achshalteeinrichtung. Weiterhin ist von Nachteil, daß zur Betätigung der Achshalteeinrichtung eine pneumatische Druckversorgung vorhanden sen muß. Bei Ausfall dieser Druckversorgung ist folglich die Achshalteeinrichtung beispielsweise nach Entlüften des federnden Luftbalgs nicht funktionsfähig.

Es ist daher Aufgabe der Erfindung, das vorbekannte Fahrzeug hinsichtlich des Aufbaus der Achshalteeinrichtung bei gleichzeitiger Reduktion der Kosten zu vereinfachen und deren automatische Funktion unabhängig von einer pneumatischen oder hydraulischen Druckversorgung zu gewährleisten.

Diese Aufgabe wird bei einem Fahrzeug mit den Merkmalen des Oberbegriffs des Anspruchs 1 dadurch gelöst, daß die Achshalteeinrichtung als Feder ausgebildet ist, deren oberes Ende dem Fahrzeugrahmen und deren unteres Ende der Achse zugeordnet ist.

Die Feder ist so vorgespannt, daß bei Entlüften des Luftbalgs die Achse automatisch in Richtung des Fahrzeugrahmens angehoben wird. Weiterhin ist die Vorspannung der Feder so auswählbar, daß bei Entlasten der Achse beispielsweise durch Anheben des Fahrzeugs auch bei nichtentlüfteten Luftbälgen die Achse nur so weit vom Fahrzeugrahmen herabhängt, daß eine übermäßige Verformung eines Balgelements des Luftbalgs nicht auftritt. Aufgrund der fehlenden Entlüftung des Balgelements wird die Achse zwar etwas gegen die Kraft der Feder vom Fahrzeugrahmen weggedrückt, allerdings so wenig, daß bei Wiederbelastung der Achse ein ordnungsgemäßes Abrollverhalten des Balgelements ohne dieses einzuklemmen oder zu beschädigen gewährleistet ist. Ein zusätzliches Belüften des Balgelements beim Anheben des Fahrzeugs und Entlasten der Achse, um den Innendruck im Balgelement zu erhöhen und dessen Verformung zu verhindern, ist aufgrund der Erfindung nicht nötig.

Auch bei Ausfall der pneumatischen oder hydraulischen Druckversorgung des Fahrzeugs ist aufgrund der Erfindung ein Anheben der Achse bei zumindest teilweise entlüftetem Luftbalg möglich und ein zu weites Herabsinken der Achse beim Anheben des Fahrzeugs verhindert.

Bei einer Ausführungsform der Erfindung ist die Feder als zwischen Fahrzeugrahmen und Längslenker angeordnete Zugfeder ausgebildet. Diese ist mit einer vorbestimmten Zugspannung vorgespannt, so daß die oben beschriebene Funktion der Achshalteeinrichtung gewährleistet ist.

Die Zugfeder ist mit ihrem unteren Ende an jeder Stelle des Längslenkers anordbar, wobei aufgrund der bekannten Form des Längslenkers und der Anordnung des Luftbalgs die Zugfeder in vorteilhafter Weise mit ihrem unteren Ende zwischen der Achse und einem Längslenkerlager angelenkt ist.

Um ein beidseitiges Anheben der Achse zu ermöglichen, ist es von Vorteil, wenn jedem Längslenker an beiden Enden einer Achse eine Zugfeder zugeordnet ist. Entsprechend können durch die Verwendung mehrerer Zugfedern diese mit einer kleineren Federkonstante als bei Verwendung nur einer Feder ausgebildet sein. Dadurch sind leichtere Federn verwendbar, deren Montage am Fahrzeug erleichtert ist.

Wenn das untere Ende der Zugfeder unterhalb und in Fahrtrichtung nach vorne versetzt zur Achse gelagert ist, wirkt die Feder in günstiger Weise in etwa auf den Schwerpunkt des Systems aus Längslenker, Achse und Luftbalg.

In diesem Zusammenhang ist es weiterhin von Vorteil, wenn das untere Ende in Fahr- oder in abgesenkter Stellung der Achse gegenüber dem oberen Ende der Feder nach vorne verschwenkt und in angehobener Stellung im wesentlichen mit dem oberen Ende auf einer Vertikalen angeordnet ist. Bei dieser Anordnung der Feder ist die Federkraft optimal zum Anheben der Achse einsetzbar und im angehobenen Zustand der Achse ist die Federkraft im wesentlichen entgegengesetzt zur Gewichtskraft der Achse gerichtet.

Da der Schwerpunkt des Systems aus Längslenker, Achse, Rädern und Luftbalg benachbart zur Achse angeordnet ist, ist es in diesem Zusammenhang günstig, wenn in der angehobenen Stellung der Achse der Abstand zwischen Zugfeder und Achse minimal ist. Auf diese Weise ist die Federkraft bei angehobener Achse in etwa zum Schwerpunkt ausgerichtet.

Bei einer anderen Ausführungsform der Erfindung ist die Feder als Druckfeder ausgebildet und mit ihrem unteren Ende an einem über das Längslenkerlager nach vorne verlängerten Ende eines Längslenkers gehaltert. Der Längslenker entspricht in diesem Fall einem Hebel mit dem Längslenkerlager als Hebeldrehpunkt. Auf einen Hebelarm wirkt das Gewicht der Achse und bei belüftetem Luftbalg der jeweilige Innendruck des Balgelements. Auf den anderen Hebelarm wirkt die vorkomprimierte Druckfeder. Bei Entlüftung des Balgelements wird die Achse aufgrund der Federkraft der Druckfeder angehoben. Beim Anheben des Fahrzeugs begrenzt die Druckfeder ein Herabhängen der Achse, so daß das Balgelement nicht ungünstig verformt wird.

Entsprechend zur Zugfeder sind Druckfedern jedem Längslenker einer Achse zuordbar.

Bei einer weiteren Ausführungsform der Erfindung ist die Feder im wesentlichen mittig zwischen den an beiden Enden der Achse gelagerten Längslenkern angeordnet. In diesem Fall ist das untere Ende der Zug- beziehungsweise Druckfeder entsprechend an der Achse angelenkt.

Um in der angehobenen Stellung der Achse diese schwingungsfrei am Fahrzeugrahmen zu halten, ist es von Vorteil, wenn die Feder in der angehobenen Stellung der Achse zum Andrücken eines oberen Endes eines Abrolltopfes des Luftbalgs an einer am Fahrzeugrahmen angeordnete Luftbalghalterung bis auf eine Andruckspannung entspannt ist. Mittels der Andruckspannung wird ein Schwingen der Achse verhindert und die angehobene Stellung der Achse ist fixiert.

Be einer weiteren Ausführungsform der Erfindung ist die Feder, insbesondere die Zugfeder, einstückig mit einem Stoßdämpfer gebildet. Stoßdämpfer und Feder sind als Einbauteil am Fahrzeug anordbar, wodurch der Platzbedarf verringert und die Montage erleichtert wird.

Die erfindungsgemäß vorgeschlagenen Lösungen und vorteilhafte Ausführungsbeispiele davon werden im folgenden anhand der in der Zeichnung dargestellten Figuren weiter erläutert und beschrieben.

Es zeigen:
- Fig.1: das erfindungsgemäße Fahrzeug mit einer Achshalteeinrichtung in Fahrstellung einer Achse;
- Fig.2: die Achshalteeinrichtung bei angehobenem Fahrzeug, und
- Fig.3: die Achshalteeinrichtung bei angehobener Achse.

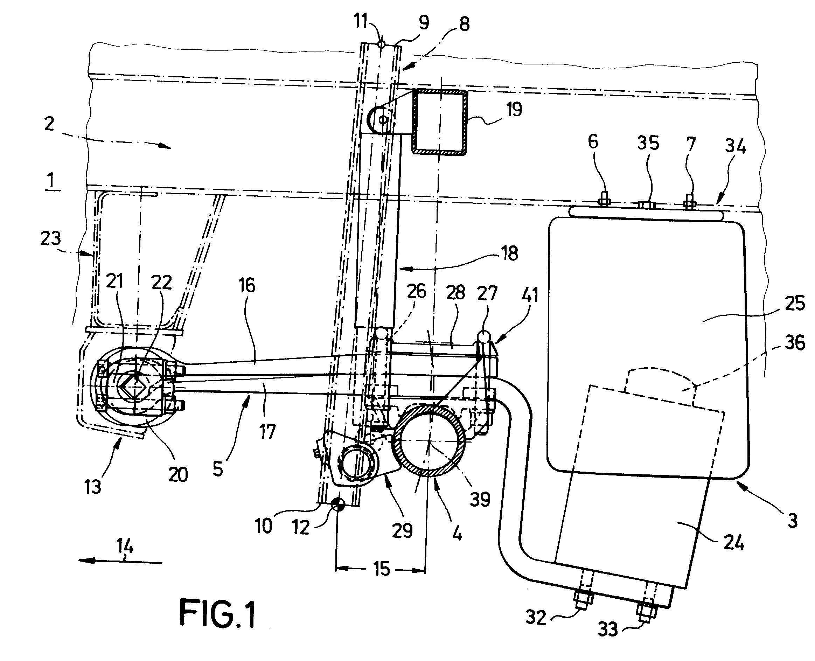

In Figur 1 ist ein Fahrzeug 1 mit einem Fahrzeugrahmen 2, insbesondere einem Längsträger, dargestellt. Unterhalb des Längsträgers ist eine Achse 4 mittels eines Längslenkers 5 an einem Längslenkerlager verschwenkbar gelagert. Das Längslenkerlager 13 ist mittels eines Lagerrahmens 23 auf der Unterseite des Fahrzeugrahmens 2 befestigt. Im Längslenkerlager 13 ist eine Lagerachse 22 ausgebildet, an der der Längslenker 5 mittels zweier konzentrischer Endabschnitte 20 und 21 verschwenkbar gelagert ist. Die Endabschnitte 20 und 21 sind in etwa kreisförmig ausgebildet und bilden die Enden der den Längsträger 5 bildenden Zuglenker 16 und Luftbalglenker 17.

Der Zuglenker 16 erstreckt sich im wesentlichen vom Längslenkerlager 13 bis oberhalb der Achse 4. Der Luftbalglenker 17 ist in etwa Z-förmig ausgebildet. Ein oberer Z-Schenkel verläuft unterhalb des Zuglenkers 16 und weist an seinem freien Ende den Endabschnitt 21 auf. Über den größten Teil der Länge des Zuglenkers 16 ist der obere Z-Schenkel des Luftbalglenkers 17 mit diesem in Anlage. Ein unterer Z-Schenkel des Luftbalglenkers 17 trägt auf seiner Oberseite einen Luftbalg 3 der mittels zweier Schrauben 32 und 33 am unteren Z-Schenkel befestigt ist. Zwischen den beiden Z-Schenkeln verläuft ein in Figur 1 im wesentlichen vertikal ausgerichteter Verbindungsschenkel.

Zuglenker 16 und oberer Z-Schenkel sind mittels einer Abschlußplatte 28 und zweier Befestigungsschrauben 26 und 27 mit einem an der Achse 4 fixierten Bremswellenlager 29 verbunden. Die Befestigungsschrauben 26 und 27 sind beidseitig und oberhalb der Achse 4 angeordnet und durchdringen Abschlußplatte 28 und Bremswellenlager 29, an dem sie mittels zweier Befestigungsmuttern befestigt sind. Sie sind seitlich an Zuglenker 16 und Luftbalglenker 17 angeordnet.

In Fahrtrichtung 14 vor der Achse 4 ist am Bremswellenlager 29 ein unteres Ende eines Stoßdämpfers 18 drehbar gelagert. Das obere Ende des Stoßdämpfers 18 ist an einem nach vorne weisenden Flansch eines Querträgers 19 drehbar gelagert.

Neben dem Stoßdämpfer 18 und in etwa parallel zu diesem ist eine Feder 8 angeordnet. Ihr oberes Ende 9 ist an einem Lager 11 des Fahrzeugrahmens 2 und ihr unteres Ende 10 an einem Lager 12 des Befestigungsflansches 29 drehbar gelagert. Das untere Lager 12 ist gegenüber der Achse 4 nach vorne versetzt und unterhalb der Achse angeordnet. Das obere Lager 11 ist in etwa vertikal oberhalb des oberen Lagers für den Stoßdämpfer 18 angeordnet. In der in Figur 1 dargestellten Fahrstellung der Achse 4 ist das untere Ende 12 der Feder 8 in einem Abstand 15 von einer durch einen Mittelpunkt 39 der Achse 4 verlaufenden Vertikalen angeordnet.

Der auf dem unteren Z-Schenkel des Luftbalglenkers 17 befestigte Luftbalg 3 umfaßt einen Abrolltopf 24 und ein Balgelement 25. Der Abrolltopf 24 ist im wesentlichen zylinderförmig und mittels der Schrauben 32 und 33 am Luftbalglenker 17 befestigt. Sein oberes Ende ist in bekannter Weise mit dem Balgelement 25 verbunden. Im Inneren des Balgelements 25 ist auf dem oberen Ende des Abrolltopfes 24 ein Anschlagpuffer 36 angeordnet. Gegenüberliegend zum Abrolltopf 24 ist das Balgelement 25 mittels einer Halterung 34 am Fahrzeugrahmen 2 befestigt. Die Halterung weist zwei Befestigungsschrauben 6 und 7 zur Befestigung des Balgelements 25 sowie einen Druckluftanschluß 35 zur Be- und Entlüftung auf. Dieser steht mit dem luftdicht abgeschlossenen Inneren des Balgelements 25 in Verbindung.

In der in Figur 1 dargestellten Fahrstellung der Achse 4 ist das Balgelement 25 in etwa über die obere Hälfte des Abrolltopfes 24 abgerollt. Bei Fahrt des Fahrzeugs 1 rollt das Balgelement 25 mehr oder weniger auf dem Abrolltopf 24 ab. Durch den Innendruck im Balgelement 25 ist ein Anschlagen des Anschlagpuffers 36 an die Halterung 34 beim Verschwenken des Längslenkers 5 um die Lagerachse 22 in Zusammenwirkung mit dem Stoßdämpfer 18 unterbunden.

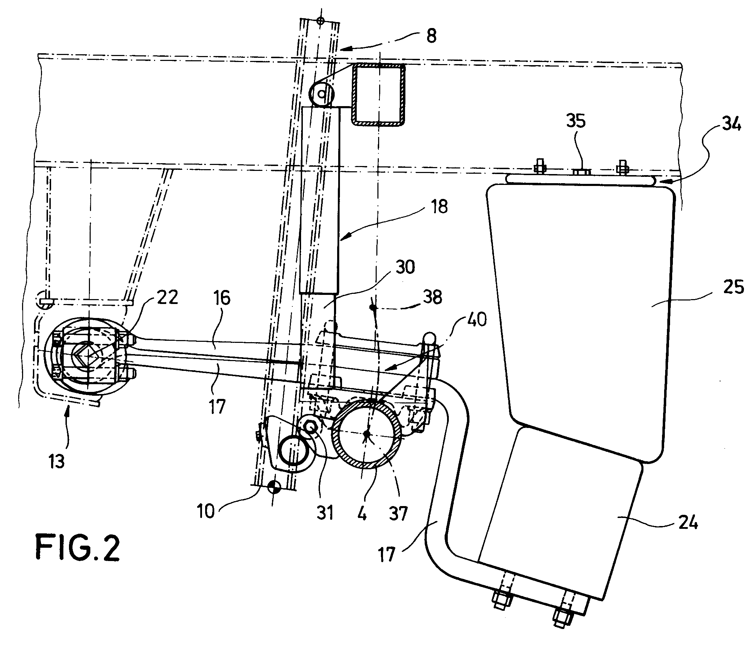

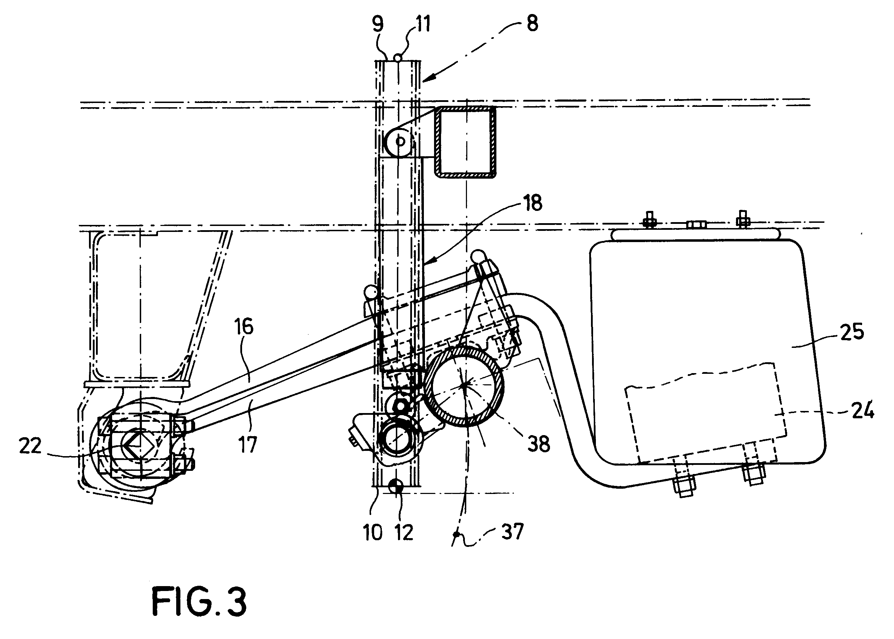

In Figur 2 ist das Fahrzeug aus Figur 1 mit einer abgesenkten Achse 4 dargestellt. In Figur 2 wie auch in der folgenden Figur 3 sind die Bezugszeichen aus Figur 1 nur insoweit dargestellt, wie sie zur Erläuterung der Figuren notwendig sind. Ansonsten wird auf die Beschreibung der Figur 1 verwiesen.

Gemäß der Absenkung der Achse 4 in Figur 2 ist der Längslenker 5 um seine Lagerachse 22 nach unten verschwenkt. Der Mittelpunkt 37 der Achse 4 ist gegenüber der Darstellung nach Figur 1 entlang der Kreisbahn 40 um die Lagerachse 22 als Mittelpunkt nach unten verschoben.

Ein Kolben 30 des Stoßdämpfers 18 ist durch die Verbindung mit der Achse 4 durch ein unteres Lager 31 nahezu vollständig aus dem Stoßdämpfer ausgezogen. Das untere Ende 10 der Feder 8 ist durch die Gewichtskraft von Längslenker 5, Achse 4, Luftbalg 3 und Innendruck im Balgelement 25 gegen die Rückstellkraft der Feder 8 nach unten gegenüber der Darstellung gemäß Figur 1 ausgelenkt.

Das Balgelement 25 ist zwischen Halterung 34 und Abrolltopf 24 eingespannt, wobei die Seitenflächen des Abrolltopfes 24 vollständig freigelegt sind.

In Figur 3 ist die Achse 4 in ihrer angehobenen Stellung dargestellt. Der Längslenker 5 ist um die Lagerachse 22 soweit nach oben geschwenkt, daß der Anschlagpuffer 36 aus Figur 1 von unten mit der Halterung 34 in Anlage ist. Das Balgelement 25 ist vollständig über den Abrolltopf 24 abgerollt und überdeckt teilweise den unteren Z-Schenkel des Luftbalglenkers 17.

Der Mittelpunkt 38 der Achse 4 ist entlang der Kreislinie 40 in Richtung des Fahrzeugrahmens 2 bewegt. Das Bezugszeichen 37 bezeichnet die Stellung des Mittelpunkts gemäß der Figur 2.

Der Kolben des Stoßdämpfers 18 ist nahezu vollständig in diesen eingeschoben und die Feder 8 ist gegenüber der Darstellung nach Figuren 1 und 2 zusammengezogen. Feder 8 und Stoßdämpfer 18 verlaufen in etwa parallel zueinander und die Lager 11 und 12 des oberen und unteren Endes 9 und 10 der Feder 8 sind auf einer Vertikalen angeordnet.

Im folgenden wird die Wirkungsweise der Achshalteeinrichtung des erfindungsgemäßen Fahrzeugs kurz erläutert.

In der Fahrstellung der Achse nach Figur 1 wird der Längslenker 5 durch die vorgespannte Zugfeder 8 in Richtung auf das Fahrgestell 2 kraftbeaufschlagt. Zur Kompensation dieser zusätzlichen Zugkraft ist der Innendruck im Balgelement 25 erhöht. Dadurch ist bei dem Fahrzeug 1 ein besseres und sicheres Ansprechverhalten der Steuerventile zum Be- und Entlüften gewährleistet.

Bei einem Anheben des Fahrzeugs wie es beispielsweise in Figur 2 dargestellt ist, wird aufgrund des Innendrucks im Balgelement 25 und der Gewichtskraft von Längslenker 5, Achse 4 und Luftbalg 3 die Achse vom Fahrzeugrahmen weg nach unten abgesenkt. Durch die entgegenwirkende Federkraft der Zugfeder 8 wird das Absenken der Achse 4 begrenzt, wobei in dem in Figur 2 dargestellten Gleichgewichtszustand die Federkraft gerade die oben erwähnte Gewichtskraft und die durch den Innendruck des Balgelements ausgeübte Kraft kompensiert. Durch die Volumenvergrößerung des Balgelements beim Absenken des Abrolltopfes 24 wird der Innendruck zwar reduziert, er reicht aber aus, um einen Unterdruck im Balgelement 25 zu verhindern. Auf diese Weise werden die Seitenwände des Balgelements nicht zur Innenseite gesogen und möglicherweise beim erneuten Abrollen auf dem Abrolltopf 24 von diesem beschädigt oder eingeklemmt.

Der Betrag des im abgesenkten Zustand der Achse im Balgelement 25 verbleibenden Innendrucks ist durch Auswahl der Zugfeder 8 bestimmbar.

Wird das Balgelement 25 über das Ventil 35 entlüftet, hebt die Zugfeder 8 die Achse 4 an, bis der Anschlagpuffer 36 an der Halterung 34 beziehungsweise am Fahrzeugrahmen 2 anliegt. Die Vorspannung der Feder ist so ausgewählt, daß bei Anlage des Anschlagpuffers 36 die Feder noch gedehnt ist und unter einer Anlagespannung steht. Diese Spannung reicht aus, um beispielsweise während des Fahrens den Anschlagknopf 36 sicher an die Halterung 34 anzudrücken. Ein Schwingen des Längslenkers 5 bei angehobener Achse 4 ist somit unterbunden.

## Patentansprüche

1. Fahrzeug (1) mit wenigstens einer gegenüber einem Fahrzeugrahmen (2) mittels Luftbälgen (3) gefederten Achse (4), die von verschwenkbar am Fahrzeugrahmen gelagerten Längslenkern (5; 16, 17) gehaltert ist, wobei die Luftbälge (3) durch Ventile (6, 7) be- und entlüftbar sind, und mit einer Achshalteeinrichtung (8) zum Halten der Achse (4) bei zumindest teilweise entlüfteten Luftbälgen (3),
**dadurch gekennzeichnet,**
daß die Achshalteeinrichtung (8) als Feder ausgebildet ist, deren oberes Ende (9) dem Fahrzeugrahmen (2) und deren unteres Ende (10) der Achse (4) zugeordnet ist.

2. Fahrzeug nach Anspruch 1,
**dadurch gekennzeichnet,**
daß die Feder (8) als zwischen Fahrzeugrahmen (2) und Längslenker (5) angeordnete Zugfeder ausgebildet ist.

3. Fahrzeug nach Anspruch 2,
**dadurch gekennzeichnet,**
daß die Zugfeder (8) mit ihrem unteren Ende (10) zwischen der Achse (4) und einem Längslenkerlager (13) angelenkt ist.

4. Fahrzeug nach wenigstens einem der vorangehenden Ansprüche,
**dadurch gekennzeichnet,**
daß jedem Längslenker (5; 16, 17) eine Zugfeder (8) zugeordnet ist.

5. Fahrzeug nach wenigstens einem der vorangehenden Ansprüche,
**dadurch gekennzeichnet,**
daß das untere Ende (10) der Zugfeder (8) unterhalb und in Fahrtrichtung (14) nach vorne versetzt zur Achse (4) gelagert ist.

6. Fahrzeug nach wenigstens einem der vorangehenden Ansprüche,
**dadurch gekennzeichnet,**
daß das untere Ende (10) in Fahr- oder abgesenkter Stellung der Achse (4) gegenüber dem oberen Ende (9) der Feder (8) nach vorne verschwenkt und in angehobener Stellung im wesentlichen mit dem oberen Ende (9) auf einer Vertikalen angeordnet ist.

7. Fahrzeug nach wenigstens einem der vorangehenden Ansprüche,
**dadurch gekennzeichnet,**
daß in der angehobenen Stellung der Achse (4) der Abstand (15) zwischen Zugfeder (8) und Achse (4) minimal ist.

8. Fahrzeug nach Anspruch 1,
**dadurch gekennzeichnet,**
daß die Feder (8) als Druckfeder ausgebildet ist und mit ihrem unteren Ende (10) an einem über das Längslenkerlager (13) nach vorne verlängerten Ende eines Längslenkers (5; 16, 17) gelagert ist.

9. Fahrzeug nach wenigstens einem der vorangehenden Ansprüche,
**dadurch gekennzeichnet,**
daß die Feder (8) im wesentlichen mittig zwischen den Längslenkern (5; 16, 17) an der Achse (4) gelagert ist.

10. Fahrzeug nach wenigstens einem der vorangehenden Ansprüche,
**dadurch gekennzeichnet,**
daß die Feder (8) in der angehobenen Stellung der Achse (4) zum Andrücken eines oberen Endes (36) eines Abrolltopfes (24) des Luftbalgs (3) an eine am Fahrzeugrahmen (2) angeordnete Luftbalghalterung (34) bis auf eine Andruckspannung entspannt ist.

11. Fahrzeug nach wenigstens einem der vorangehenden Ansprüche,
**dadurch gekennzeichnet,**
daß die Feder (8) einstückig mit einem Stoßdämpfer (18) gebildet ist.
